# EUROPEAN PATENT APPLICATION

(11) **EP 1 754 983 A1**
(43) Date of publication of application: **21.02.2007**
(21) Application number: 05745662.6
(22) Date of filing: 01.06.2005
(51) Int. Cl.: G01V 3/10, G01V 3/08, G01B 7/00, G01B 11/00, F41H 11/12

(54) **DEVICE FOR SPECIFYING POSITION TO BE DETECTED AND METHOD FOR SPECIFYING POSITION TO BE DETECTED**

(30) Priority: 09.06.2004 JP 2004171347
(71) Applicant: TOKYO GAS CO., LTD., Tokyo 105-8527 (JP)
(72) Inventor: FUJIWARA, Jun, TOKYO GAS CO., LTD., Minato-ku, Tokyo 105-8527 (JP); SATO, Motoyuki, Sendai-shi Miyagi 980-0812 (JP)
(74) Representative: Koepe, Gerd L.
(86) International application number: PCT/JP2005/010054
(87) International publication number: WO 2005/121839

(57) **Abstract**

[Object] To provide a technology relating to a detection-object-position-specifying device and a method for specifying a position of an object to be detected in a simple configuration without the necessity of a fixing device.

[Solving Means] A device for specifying a position of buried anti-personnel land mines 1 includes a metal detection coil (sensor unit) 4 mounted to a distal end portion of a supporting arm 2, a CCD camera 3 mounted to the vicinity of a grip portion 7 of the supporting arm 2, a personal computer (PC) 8 as image analyzing means that imports information sent from the sensor unit 4 and the CCD camera 3 via a signal line 9 and markers 5, 6 placed on the ground (GL). The CCD camera 3 is fixed to the supporting arm 2 so that the sensor unit 4 and the markers 5, 6 can be included in a field of view (V) simultaneously.

## Description

### Technical Field

The present invention relates to a detection-object-position-specifying device and a method for specifying a position of an object to be detected and, more specifically, to a detection-object-position-specifying device which has excellent portability and a method for specifying a position of an object to be detected.

### Background Art

In the related art, when detecting an object to be detected (for example, land mines or the like) buried under the ground, a method of detecting the object to be detected by scanning the ground with a sensor (metal detector or the like) and distinguishing a change in sound at a buried object position is generally employed. However, the sound detection has a problem such that it is difficult to record information on the buried object position accurately, and the operating efficiency is not good. In order to solve this problem, a method of determining the position of the object by image-capturing the metal detector by using a CCD camera fixed on a tripod mount or the like to record the measured position, and a method of estimating the position by providing an ultrasonic transmitter or the like in the sensor and receiving a signal using a receiver fixed on the tripod mount or the like are proposed. However, with these methods, the degree of portability is decreased since a fixing device such as a tripod mount is necessary in addition to the sensor, and hence a problem occurs in that such a method is not suitable for detection of land mines which requires portability and operability on site as important factors. There is also a problem in that there may exist a position which cannot be specified accurately because the presence of the measuring person may become a hindrance for the camera or the receiver.

In addition to the methods shown above, there is also a method of detecting diffused land mines by measuring the temperature difference between the buried land mines and the ground using an infrared camera and a positioning member such as a laser marker which is set up in advance (for example, see Patent Document 1). However, the problem of requiring a fixing device is not solved in this method as well.
Patent Document 1: Japanese Unexamined Patent Application Publication No. 11-251446

### Disclosure of Invention

### Problems to be Solved by the Invention

In view of such problems, the present invention provides a technology relating to a detection-object-specifying device and a method for specifying a position of an object to be detected without the necessity of a fixing device in a simple configuration.

### Means for Solving the Problems

A detection-object-position-specifying device according to the present invention is configured as follows. The invention provides;
(1) A detection-object-position-specifying device that scans a subject area and specifies a position of an object to be detected, the device including: a sensor for determining a predetermined physical property value of the object to be detected; supporting means for supporting the sensor; a marker provided in the subject area; image capturing means fixed to the supporting means in a manner such that the image capturing means is capable of image-capturing the sensor and the marker; means for specifying a position of the sensor on the basis of a relative positional relationship between the marker and the sensor in the image captured by the image capturing means; and means for specifying the position of the object to be detected on the basis of the position of the sensor and the physical property value.
   According to the present invention, since the image capturing means is fixed to the supporting means so as to be capable of image-capturing the sensor and the marker, the positions of the sensor and the marker can always be displayed in images, and the relative positional relationship between the marker and the sensor can be obtained by analyzing the images. The coordinate between the position of the sensor and the physical property values of the object to be detected can be obtained by measuring the physical property value of the object to be detected.
   In the invention, the term "object to be detected" is a concept including not only objects such as land mines or gas piping, but also intangible substances such as vapor like gas, leaked current from a circuit board, or leaked electromagnetic field, and the like.
   The term "physical property value" is a concept including, for example, electric current, magnetism, magnetic field, electromagnetic field, temperature, sound pressure, light, odor, and gas concentration.
   The term "sensor" is a concept including, for example, magnetic sensors, electric field sensors, electromagnetic field sensors, temperature sensors, sound pressure sensors, light sensors, odor sensors, and gas concentration sensors.
   The term "image capturing means" includes, for example, infrared cameras, and CCD cameras.
(2) The invention is characterized by the provision of means for displaying the position of the sensor on the image when the physical property value of the object to be detected exceeds a predetermined threshold value.
   In this arrangement, the position where the object to be detected is highly likely to exist can be displayed on the image.
(3) In addition to the term (2), the present invention is characterized by the provision of means for displaying the position of the sensor on the image when the physical property value of the object to be detected is equal to or less than the predetermined threshold value, the display for when the physical property value exceeds the threshold value being different from the display for when the physical property value is equal to or less than the predetermined threshold value.
(4) The present invention is characterized in that the marker comprises a characteristic object disposed within the subject area.
   According to the present invention, for example, road-signs such as white lines drawn on the ground, rocks or the like can be used as the marker without preparing a specific marker.
(5) The invention is characterized in that the image capturing means comprises a CCD camera.
   By the employment of the CCD camera which can be miniaturized easily as the image capturing means, it can be fixed to the supporting means and is excellent in terms of portability.
(6) The present invention is characterized in that the sensor comprises a metal detector, and the object to be detected comprises a buried land mine.
   The present invention can be applied easily to the metal detector in which technical know-how to be used for scanning the buried land mines is accumulated, whereby a significant improvement in the operating efficiency of the land mine scanning is achieved.
(7) The present invention is characterized in that the sensor comprises an electromagnetic field sensor, and the object to be detected comprises a gas pipe buried underground.
   With the underground radar in the related art, since the sensor is moved one-dimensionally and hence positional information of the sensor can be obtained only one-dimensionally, only the cross-sectional underground image can be obtained. Therefore, it is difficult to distinguish an elongated substance such as a gas pipe from a small stone or the like.
   According to the present invention, the horizontal positional information of the sensor can be obtained two-dimensionally in a simple manner. Therefore, the underground region can be displayed three-dimensionally, and hence an elongated substance such as a gas pipe can be distinguished effectively from a small stone or the like easily.
(8) A method for specifying a position of an object to be detected, including: a step for image-capturing a marker and a sensor within an image; a step for scanning a subject area and determining a predetermined physical property value of the object to be detected; a step for specifying a position of the sensor on the basis of a relative positional relationship between the marker and the sensor in the image captured in the image-capturing step; and a step for specifying the position of the object to be detected on the basis of a relationship between the specified position of the sensor and the physical property value.

### Advantages

According to the invention described above, since the sensor output can be displayed as visual information, the position of the object to be detected can advantageously be imaged. In addition, an image with a higher degree of accuracy can be generated advantageously by performing signal processing such as synthetic aperture signal processing and migration signal processing for the obtained image.

Since reductions in size and weight can be achieved easily, the invention can be used horizontally or vertically, and operation of the invention in the open air is extremely easy.

### Best Mode for Carrying Out the Invention

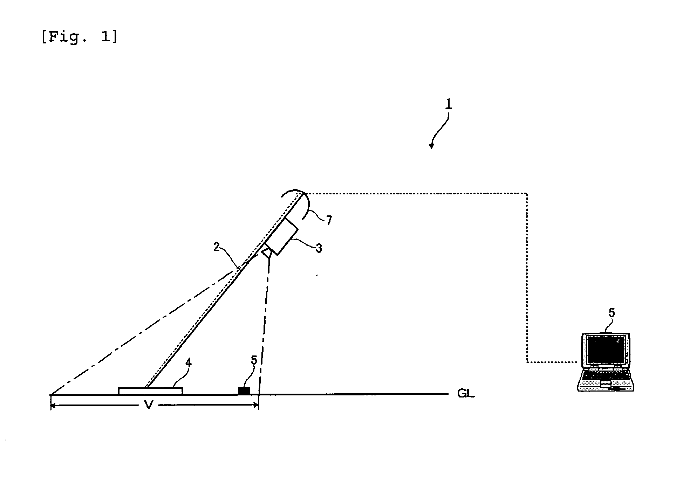

Referring now to Figs. 1 to 4, an embodiment of a detection-object-position-specifying device according to the present invention will be described further in detail. The same configurations are represented by the same reference numerals throughout the drawings in order to avoid unnecessary repetition of description. The scope of the present invention is described in the appended claims, and the invention is not limited to the following embodiment.

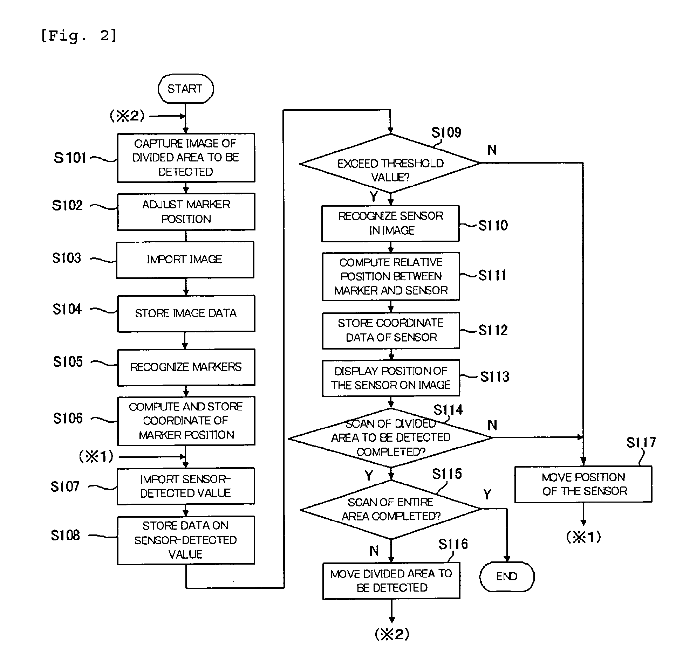

Fig. 1 is a drawing showing a configuration of a device for specifying a position of a buried anti-personnel land mine according to an embodiment of the invention. Fig. 2 is a drawing showing a flow of analysis of the buried mine position.

Referring now to Fig. 1, a device for specifying a position of a buried anti-personnel land mine 1 according to the present invention includes a metal detection coil (sensor unit) 4 mounted to a distal end portion of a supporting arm 2, a CCD camera 3 mounted in the vicinity of a grip portion 7 of the supporting arm 2, a personal computer (PC) 8 (corresponding to image analyzing means) as image analyzing means that imports signals sent from the sensor unit 4 and the CCD camera 3 via a signal line 9, and markers 5, 6 placed on the ground (GL). The CCD camera 3 is adjusted so that the sensor unit 4 and the markers 5, 6 can be included in a field of view (V) simultaneously, and is fixed to the supporting arm 2.

The personal computer 8 includes a memory unit for storing detected value data and image data imported from the sensor unit 4 and the CCD camera 3, an image analyzing unit for reading the image data and recognizing markers in the image on the basis of shape parameters of the markers, a computing unit for computing the relative position of the marker and the sensor and a display unit for displaying the position of the sensor.

Subsequently, referring also to Fig. 2, a flow for determining the position of a buried land mine by the device for specifying a position of a buried anti-personnel land mine 1 will be described. Firstly, the field of view of the CCD camera 3 is adjusted so that the divided area obtained by dividing the entire area as an object to be detected is included in the display (Step S101), and then the markers are installed at positions which are included in the display (Step S102). Then, the captured image is imported into the personal computer 8 (Step S103).

The following procedures are performed in the personal computer 8. Firstly, the personal computer 8 stores the image data in a predetermined image storage address (Step S104). Then, the personal computer 8 recognizes the markers in the image on the basis of the shape parameter of the marker stored in advance (Step S105), and obtains the position coordinate data in the image and stores the same in a predetermined memory address (Step S106).

Then, the personal computer 8 imports the detected value of the sensor unit 4 (Step S107), and stores the same into the predetermined memory address (Step S108). Then, whether or not this value exceeds a predetermined threshold value is determined (Step S109). When it does not exceed the threshold value (No in Step S109), the sensor unit 4 is moved (Step S117), and the detected value is imported again at the new position. (*1).

When the detected value exceeds the threshold value (YES in Step S109), recognition of the sensor unit 4 in the image is performed (Step S110). The recognizing method is the same as the marker recognizing step described above. In addition, the relative position coordinate of the sensor with respect to the marker position coordinate obtained in the above-described step is computed (Step S111), and the position coordinate data is stored in the predetermined memory address (Step S112). Subsequently, a mark which indicates the position of the sensor is displayed at the position corresponding to the relative coordinate of the sensor with respect to the markers in the image (Step S113).

Subsequently, whether or not the scanning of the divided area is completed is determined (Step S114). If not, the position of the sensor is moved in the divided area (Step S117), and the image is imported again (*1).

When the scanning of the divided area is completed, determination of whether or not the scanning is completed in the entire area as the object to be detected is performed (Step S115). If the scanning is not completed in the entire area, a new image is imported in the next divided area after having moved thereto (Step S116). If the scanning is completed in the entire area, the operation is terminated.

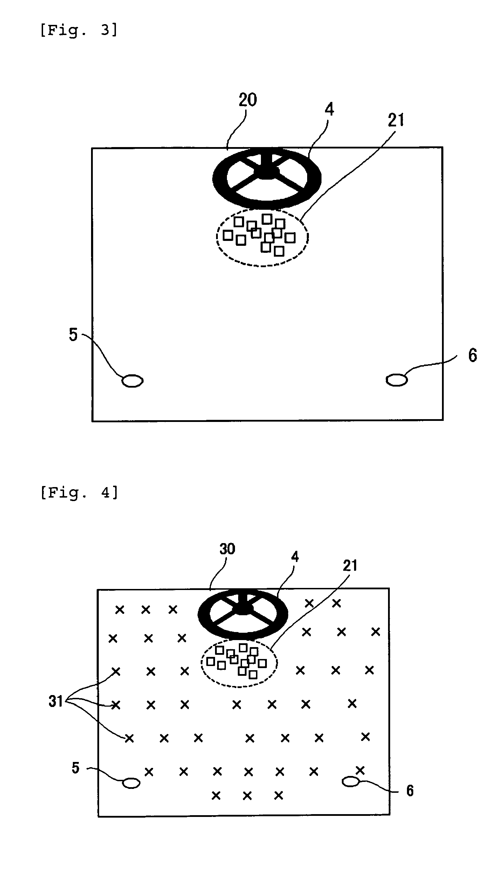

Fig. 3 is a drawing showing an example of a displayed screen that displays the position of the sensor in the above-described steps. In a display screen 20, respective points which are indicated by square marks 21 represent positions where the values detected by the sensor exceed the predetermined threshold value. The points where the land mine is buried can be recognized as the relative position with respect to the marker 5 or 6 by analyzing this image.

Another embodiment of the present invention will now be described. In the embodiment shown above, a mode in which the positions where the values detected by the sensor exceed the predetermined threshold value are displayed in the image has been described. In contrast, according to a mode in this embodiment, all the positions detected by the sensor are displayed. Fig. 4 illustrates this embodiment, and in this drawing, points which are indicated by the square marks 21 are positions where the detected values exceed the threshold value, and points which are indicated by cross marks 31 are positions where the detected values do not exceed the threshold value. Since the shape of the mark is differentiated depending on the value detected by the sensor in this manner, whether or not the divided area is scanned without omission can be determined easily.

According to the modes in the respective embodiments shown above, one image for one divided area is imported. However, the invention is not limited thereto, and a mode of importing a plurality of images for one division, or a mode of importing one image for a plurality of divisions can also be employed.

Although the marker is placed by the measuring personnel in the above-described embodiments, the invention is not limited thereto, and it is also possible to use characteristic objects such as rocks on the ground or a white line. In addition, it is also possible to determine the absolute position on the map by determining the position of the marker using the GPS.

### Industrial Applicability

The present invention can be widely applied as a method and a device for acquiring the position of a sensor irrespective of the object to be detected.

### Brief Description of the Drawings

Fig. 1 is a drawing showing a configuration of a device for specifying a position of a buried anti-personnel land mine according to an embodiment of the present invention.
Fig. 2 is a drawing showing a flow of analysis of the position of the buried land mine.
Fig. 3 is a drawing showing an example of a displayed screen showing the position of a sensor where the detected value exceeds a predetermined threshold value.
Fig. 4 is a drawing showing an example of a displayed screen showing the position detected by the sensor according to another embodiment of the present invention.

### Reference Numerals

- 1: device for specifying a position of a buried anti-personnel land mine
- 2: supporting arm
- 3: CCD camera
- 4: metal detection coil (sensor unit)
- 5, 6: marker
- 7: grip
- 8: personal computer (PC)

## Claims

1. A detection-object-position-specifying device that scans a subject area and specifies a position of an object to be detected, the device comprising:
a sensor for determining a predetermined physical-property value of the object to be detected;
supporting means for supporting the sensor;
a marker provided in the subject area;
image capturing means fixed to the supporting means in a manner such that the image capturing means is capable of image-capturing the sensor and the marker;
means for specifying a position of the sensor on the basis of a relative positional relationship between the marker and the sensor in the image captured by the image capturing means; and
means for specifying the position of the object to be detected on the basis of the position of the sensor and the physical property value.

2. The detection-object-position-specifying device according to Claim 1, further comprising means for displaying the position of the sensor on the image when the physical property value of the object to be detected exceeds a predetermined threshold value.

3. The detection-object-position-specifying device according to Claim 2, further comprising means for displaying the position of the sensor on the image when the physical property value of the object to be detected is equal to or less than the predetermined threshold value, the display for when the physical property value exceeds the threshold value being different from the display for when the physical property value is equal to or less than the predetermined threshold value.

4. The detection-object-position-specifying device according to any one of Claims 1 to 3, wherein the marker comprises a characteristic object disposed within the subject area.

5. The detection-object-position-specifying device according to any one of Claims 1 to 4, wherein the image capturing means comprises a CCD camera.

6. The detection-object-position-specifying device according to any one of Claims 1 to 5, wherein the sensor comprises a metal detector, and the object to be detected comprises a buried land mine.

7. The detection-object-position-specifying device according to any one of Claims 1 to 6, wherein the sensor comprises an electromagnetic field sensor, and the object to be detected comprises a gas pipe buried underground.

8. A method for specifying a position of an object to be detected, comprising:
a step for image-capturing a marker and a sensor within an image;
a step for scanning a subject area and determining a predetermined physical-property value of the object to be detected;
a step for specifying a position of the sensor on the basis of a relative positional relationship between the marker and the sensor in the image captured in the image-capturing step; and
a step for specifying the position of the object to be detected on the basis of a relationship between the specified position of the sensor and the physical property value.
